(19) Europäisches Patentamt / European Patent Office / Office européen des brevets

(11) **EP 4 375 803 A1**

(12) **EUROPEAN PATENT APPLICATION**

(43) Date of publication:
**29.05.2024 Bulletin 2024/22**

(21) Application number: **22209535.8**

(22) Date of filing: **25.11.2022**

(51) International Patent Classification (IPC):
**G06F 3/01** *(2006.01)*    **G01S 13/76** *(2006.01)*
**G06F 3/0346** *(2013.01)*    **H04N 21/41** *(2011.01)*
**H04M 1/72415** *(2021.01)*

(52) Cooperative Patent Classification (CPC):
**G06F 3/017; G01S 13/765; G06F 3/014;**
**G06F 3/0346; H04M 1/72454; H04N 21/4104;**
**H04N 21/41407; H04N 21/42201; H04N 21/42221;**
**H04N 21/4852;** H04M 1/72412

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Nagravision Sàrl**
**1033 Cheseaux-sur-Lausanne (CH)**

(72) Inventors:
• **AGRAWAL, Dilip Kumuar**
  **560036 KRISHNARAJ PURAM (IN)**
• **SHARMA, Kirti**
  **560037 DODDANEKKUNDI (IN)**

(74) Representative: **Novagraaf International SA**
**Chemin de l'Echo 3**
**1213 Onex, Geneva (CH)**

(54) **COMPUTER IMPLEMENTED METHOD OF DETECTING GESTURE MADE BY USER**

(57)     A computer implemented method of detecting, by a UWB radio device A, a gesture made by a user wearing or holding another UWB radio device B, including the following steps performed by the UWB radio device A:

repeatedly exchanging (S2) UWB radio signals with the other UWB radio device B;

determining (S3, S4) location data of the other UWB radio device B relative to the UWB radio device A at successive points in time, based on the exchanged UWB radio signals;

detecting (S5) a gesture of the user by processing the determined location data of the other UWB radio device B

**Figure 1**

EP 4 375 803 A1

**Description**

TECHNICAL FIELD

The present disclosure relates to a computer implemented method of detecting a gesture made by a user.

BACKGROUND

Gesture recognition has many application areas, such as consumer electronics, home automation, gaming, automotive, ... It allows to detect or recognize gestures and interpret them as input commands to control a device or system. Gesture recognition can be a component of a perceptual user interface (PUI).

Gesture recognition is a computing process of recognizing and interpreting human gestures through the use of mathematical algorithms. Gesture recognition uses sensors such as cameras to detect human movements, for example hand movements, that are interpreted as commands to control a device or system to execute an action, without touching any user interface. For example, a display device such as a TV can be provided with a camera and controlled by hand movements detected by the camera: hand movements are recognized and interpreted by mathematical algorithms of gesture recognition. As an illustrative example, a gesture of clockwise circle and a gesture of anticlockwise circle, made by a user with his hand, may be recognized and interpreted as input commands to increase and decrease volume, respectively.

However, the use of a camera to recognize human gestures rises privacy issues as the camera is always on and faces the user in front of the display device, which means that the camera can see everything the user is doing.

The present invention improves the situation.

SUMMARY

The present disclosure concerns a computer implemented method of detecting, by a UWB radio device A, a gesture made by a user wearing or holding another UWB radio device B, including the following steps performed by the UWB radio device A:

repeatedly exchanging UWB radio signals with the other UWB radio device B; determining location data of the other UWB radio device B relative to the UWB radio device A at successive points in time, based on the exchanged UWB radio signals; detecting a gesture of the user by processing the determined location data of the other UWB radio device B.

Thanks to the present method, the gesture or movement of the user holding or wearing the other UWB radio device B can be precisely tracked by the UWB radio device A over time, based on the UWB radio signals exchanged between the two devices, without need to use a camera.

In an embodiment, the step of repeatedly exchanging UWB radio signals with the other UWB radio device B may include the steps of:

- repeatedly transmitting a poll message from the UWB radio device A to the UWB radio device B, and
- in response, receiving a response message from the UWB radio device B.

In that case, the step of determining the location data at each of said successive points of time may include

- determining a signal time-of-flight, based on two corresponding poll and response messages, and
- estimating a distance between the two UWB radio devices from the determined signal time-of-flight.

Furthermore, in an embodiment, determining the signal time-of-flight based on two corresponding poll and response messages may include:

- measuring, by the UWB radio device A, a round-trip time between the transmission of the poll message and the reception of the response message,
- extracting a reply time from the response message, and
- removing said reply time from the measured round-trip time.

In an embodiment, the UWB radio device A may have two receiving antennas, and the step of determining location data of the other UWB radio device B may include:

- upon reception of each response message, measuring a difference in a phase of a signal carrying the response message received at each antenna of the UWV radio device, and
- determining a direction of the other UWB radio device B based on the measured phase difference.

In an embodiment, the step of detecting a gesture of the user may include the step of determining if the determined location data of the other UWB radio device B at successive points in time matches one gesture pattern from a plurality of predetermined gesture patterns.

In an embodiment, the method may further include a step of determining a command for controlling the UWB radio device A the gesture of the user is mapped to, based on the determined gesture pattern matching the gesture of the user to a predetermined user command associated with the detected gesture pattern, and a step of controlling the UWB radio device A based on the determined command.

In an embodiment, the method may further include a step of displaying the gesture of the user detected on a display device of the UWB radio device A or connected to the UWB radio device A.

In an embodiment, the method may further comprise a step of verifying, by the UWB radio device A, that the other UWB radio device B has been previously registered with the UWB radio device A.

Advantageously, the step of repeatedly exchanging, over time, UWB radio signals with the other UWB radio device B may be started by the UWB radio device A upon detection of the other UWB radio device B within a radio coverage area of the UWB radio device A.

The present disclosure also concerns a UWB radio device comprising:

- a UWB radio module adapted to implement a UWB radio communication protocol;
- one or more radio antennas adapted to transmit and receive radio waves;
- means adapted to perform the steps of the method previously defined.

The present disclosure further concerns a system of gesture detection including:

- a UWB radio device A as defined above and
- another UWB radio device B configured to be handheld or worn by a user, and including a UWB radio module adapted to implement a UWB radio communication protocol and one or more radio antennas adapted to transmit and receive radio waves.

The other UWB radio device B may be one of the devices including a smartphone, a finger ring, and a stylus.

BRIEF DESCRIPTION OF THE DRAWINGS

Other features, purposes and advantages of the disclosure will become more explicit by means of reading the detailed statement of the non-restrictive embodiments made with reference to the accompanying drawings.

Figure 1 shows a system including a UWB radio device A with the ability to be remotely controlled by human gesture and another UWB radio device B worn or held by a user, according to an embodiment.

Figure 2 is a table including illustrative examples of gesture patterns and corresponding input commands.

Figure 3 is a flowchart of a method of gesture-based remote control of the device A by the device B of figure 1, according to an embodiment.

Figure 4 is a communication diagram illustrating the determination of the distance between the two devices A and B of figure 1.

DETAILED DESCRIPTION

The present disclosure concerns a computer implemented method of gesture detection performed by a primary UWB radio device A to recognize human gestures executed by a user wearing a secondary UWB radio device B.

In an embodiment, the primary UWB radio device A and the secondary UWB radio device B are IR-UWB (Impulse Radio Ultra-Wideband) devices.

The secondary radio device B is adapted to be held or worn by a user. It can be a smartphone, a finger ring, a pen -like object, or a stylus. These examples are only illustrative and non-limitative.

For example, the primary radio device A may be a smartphone and the secondary radio device B may be a pen-like object or stylus. In another example, the primary radio device A may be a display device such as a TV and the secondary radio device B may be a smartphone, or a pen like object or stylus. These examples are only illustrative and non-limitative.

In an embodiment, the UWB radio device A has a UWB radio module 110, a plurality of antennas $Tx_A$, $Rx_A$, a gesture control module 120, a memory 130 and a processor 140.

The UWB radio module 110 has a UWB radio transceiver 111 combining a radio transmitter and a radio receiver adapted to transmit and receive UWB radio waves. The UWB radio transceiver 111 can transmit radio waves through one or more transmitting antennas $Tx_A$ and receive radio waves through one or more receiving antennas RXA.

The UWB radio module 110 may further include a location block 112 configured to locate another UWB radio device B, based on UWB radio signals exchanged between the two devices A and B.

In an embodiment, the UWB radio module 110 includes hardware and software for implementing a UWB wireless or radio communication protocol and location, using radio waves. In an embodiment, the UWB radio module 110 is adapted to implement the standards IEEE 802.15.4a and optionally IEEE 802.15.4z. It may be implemented in a UWB SoC (System-on-Chip) or chipset.

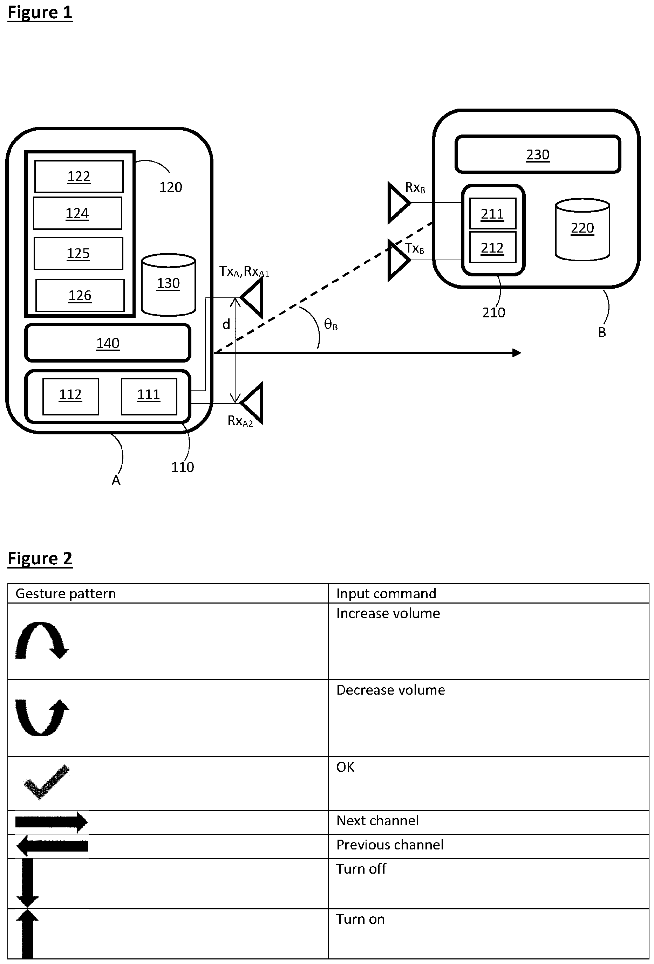

The antennas $Tx_A$, $Rx_A$ are connected to the UWB radio transceiver 111. In an embodiment, the primary radio device A has one transmitting antenna $Tx_A$ and two receiving antennas $Rx_{A1}$, $Rx_{A2}$ separated by a known distance d. The transmitting antenna $Tx_A$ and one of the two receiving antennas, for example $Rx_{A1}$, may be combined, as shown in figure 1.

The memory 130 may store predetermined gesture patterns, in digital form, in association with respective input commands to control the device A. In other words, each predetermined gesture pattern is associated with an input command in the memory 130. Each input command corresponds to a command to execute an action by the device A. In an embodiment, the memory 130 stores a correspondence or mapping table including a set of predetermined gesture patterns and, for each predetermined gesture, a corresponding input command. The predetermined gesture patterns are stored in the form of data representing the gesture patterns associated with input commands.

Figure 2 gives illustrative examples of gesture patterns and corresponding commands for controlling a display device such a TV.

The gesture control module 120 has the function of recognizing, or detecting, and interpreting movements or gestures of a human body, for example hand gestures, allowing a user to interact with and control the device A without direct physical contact.

The gesture control module 120 may include a location data acquisition block 124, a gesture recognition or detection block 125 and an interpretation block 126.

The location data acquisition block 125 is responsible for acquiring location data of another UWB radio device B, at successive points in time, and detecting if the determined location data of the UWB radio device B matches or corresponds to one of the predetermined gesture patterns stored in the memory 130. The location data of the other UWB radio device B at successive points in time is determined based on UWB radio signals repeatedly exchanged between the two devices A, B. In an embodiment, the determination of the location data is performed by the UWB radio module 110, and then transmitted to the block 125. Alternatively, the determination of the location data may be directly performed by the block 125.

The gesture recognition or detection block 125 is adapted to recognize or identify or detect that a gesture or movement may by a user wearing or holding the other UWB radio device B corresponds to one of the predetermined human gestures stored in the memory 130, based on the location data of said device B.

The interpretation block 126 is adapted to interpret human gestures or movements as input commands to control the device A, based on a mapping between the detected gesture and an input command.

The gesture control module 120 may further include a registration block 122 for registering one or more UWB radio devices. Any registered UWB radio device may be authorized to interact with and control the UWB radio device A without direct physical contact by executing gestures or movements. In an embodiment, the gesture-based remote control of the UWB radio device A can only be performed with another UWB radio device that has been registered by the device A.

The memory 130 may also store identification information of each registered UWB radio device. For example, the identification information of a secondary radio device includes an identifier like a unique identifier UID of the device. Optionally, the identification information of a secondary radio device may include a security information or credential allowing to verify the identity of the second radio device.

The gesture control module 120 may be an application, or software, configured to run on the processor 140.

The UWB radio device A may further include an operating system running on the processor 140, not represented in figure 1.

The secondary radio device B has a UWB radio module 210, one or more antennas connected to the UWB radio module 210, a memory 220 and a processor 230. The one or more antenna may include a transmitting antenna TxB and a receiving antenna $Rx_B$.

The UWB radio module 210 includes a UWB radio transceiver 211. It may also include a location block 212 configured to locate another UWB radio device, based on UWB radio signals exchanged with said other device.

The UWB radio module 210 includes hardware and software for implementing a UWB wireless or radio communication protocol and location, using radio waves. In an embodiment, the UWB radio module 210 may be adapted to implement the standards IEEE 802.15.4a and optionally IEEE 802.15.4z. It may be implemented in a UWB SoC (System-on-Chip) or chipset.

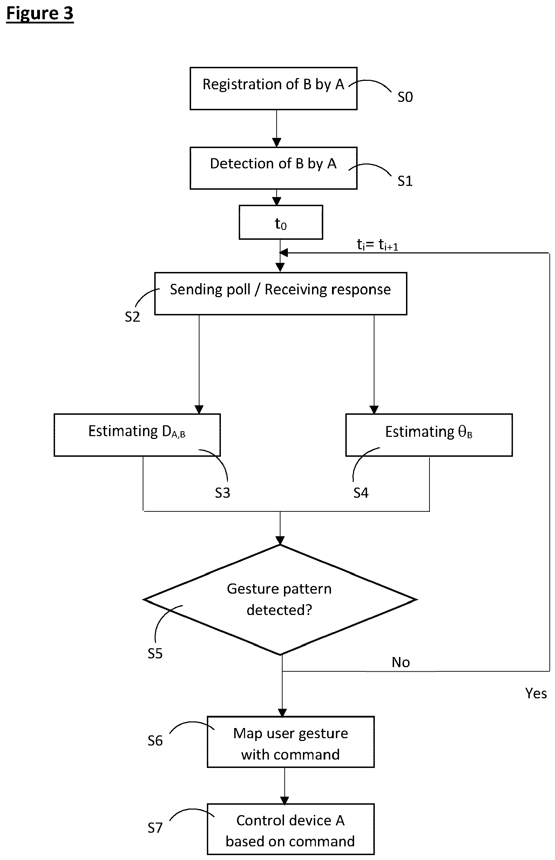

The computer implemented method of gesture detection will now be described with reference to figure 3, according to an embodiment.

In a preliminary or configuration step S0, the secondary UWB radio device B registers with the primary UWB radio device A. For that purpose, the radio device B may be placed close to the radio device A, within a radio coverage area of the radio device A. The registration of the radio device B may be activated upon command of a user through a user interface of the primary radio device A, including for example a graphical user interface provided by the registration block 122. During the registration, the secondary radio device B transmits identification information to the primary radio device A. The identification information of the secondary radio device B is stored in the memory 130.

After registration, as soon as the secondary device B approaches the primary device A and enters a radio coverage area of the primary device A the primary device A automatically detects the presence of the secondary device B, in a step S1.

Upon detection of the secondary device B, the primary device A starts ranging the secondary device B at time to. In other words, the primary device A starts estimating the distance $D_{AB}$ between the primary device A and the secondary device B, by performing the steps S2, S3 and S4, described below.

Estimating the distance between the two UWB devices A and B can be performed by a process of two-way ranging (TWR). In that case, the distance between the UWB radio device A and the UWB radio device B is determined by measuring the time, or time of flight (ToF), it takes for UWB radio signals to pass back and forth between the two devices A, B, and then multiplying that time ToF by the speed of light.

In the present disclosure, the process of two-way ranging is repeatedly performed so that the UWB radio device A can determine location data of the UWB radio device B at successive points in time and track the position of the UWB radio device B over time.

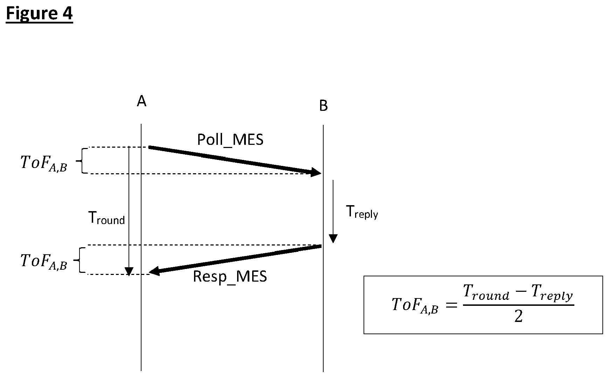

In an embodiment, the primary device A may initiate the process of two-way ranging TWR by sending a poll message Poll_MES to the secondary device B. The secondary device B sends a response message Resp_MES to the primary device A. The step S2 includes the transmission of the poll message Poll_MES and the reception of the response message Resp_MES by the UWB radio device A and is illustrated in figure 4.

The delay of the processing in the secondary device B between the reception of the poll message Poll_MES and the transmission of a response message Resp_MES, or time of reply $T_{reply}$, is determined by the secondary device B and added to the response message Resp_MES.

Upon reception of the response message Resp_MES, the primary device A measures the delay between the transmission of the poll message Poll_MES and the reception of the response message Resp_MES, that is denoted as the signal round-trip time $T_{round}$ or signal loop time. Then, in the step S3, the primary device A estimates the time-of-flight ToF between the two devices A and B based on the signal round-trip time $T_{round}$ and the time of reply $T_{reply}$, according to the following equation:

$$ToF_{A,B} = \frac{T_{round} - T_{reply}}{2}.$$

Then, the primary device A derives the distance $D_{A,B}$ between the two devices A, B by multiplying the estimated time of flight $ToF_{A,B}$ by the speed of light, in the step S3.

Alternatively, the process of two-way ranging may be initiated by the secondary device B.

In another embodiment, in the step S2, the process of two-way ranging may be performed twice: a first time, it is initiated by the device A, and a second time, it is initiated by the device B. Then, the distance $D_{A,B}$ between the two devices A, B may be estimated by averaging of the two estimated distance values.

Concomitantly to the step S3 of estimating the distance $D_{A,B}$ between the two devices A, B, the UWB radio device A may execute a step S3 of determining a direction or angle $\theta_B$ of the secondary device B with respect to a reference direction of the primary device A, as shown in figure 1. Determining the direction $\theta_B$ of the secondary device B can be performed by determining an angle of arrival of incoming UWB radio signals from the device B received by the device A, based on a phase difference technique. A phase difference of arrival can be estimated by the device A using the response of a two-way ranging TWR based on the phase difference of the signals received by the two receiving antennas $Rx_{A1}$, $Rx_{A2}$ of the device A. When the device A receives the radio signal of the response message from the device B in the step S2, it measures the difference in the phase of the incoming signal at each antenna $Rx_{A1}$, $Rx_{A2}$. Based on this phase difference, the device A can determine by calculation the angle $\theta_B$ from which the incoming signal arrived, in a well-known manner.

The step S2 of sending a poll message and receiving a response message is iteratively executed at successive points in time $t_i$, with i=0, 1, 2, ..., to estimate successive values of the distance $D_{A,B}$ between the two devices A, B over time. The step S2 may be executed with a fixed periodicity.

The step S3 is also iteratively executed at successive points in time $t_i$, with i=0, 1, 2, ... to estimate successive values of the angle or direction $\theta_B$ of the secondary device B with respect to the primary device A.

By iteratively executing the steps S2 and S3, the UWB device A determines location data of the other UWB radio device B relative to the UWB radio device A at successive points in time, based on UWB radio signals exchanged between the two devices A, B. For example, the location data includes a distance $D_{A,B}$ and a direction $\theta_B$ of the device B relative to the device A. The location data of the device B includes successive positions of the device B relative to the device A over time.

In a step S5, the UWB radio device A processes the location data of the other UWB radio device B acquired at successive points in time to determine if the movement or gesture made by the user holding or wearing the device B corresponds to one of the predetermined gesture patterns stored in the memory 130.

The processing step S5 may be performed using mathematical algorithm(s) of gesture recognition. The step S5 may be performed after each iteration of the steps S2 to S4.

If the determined location data matches one gesture pattern stored in memory 130, the device A detects that the user has executed said gesture pattern, and maps the gesture made by the user with the command associated with the detected gesture pattern in the stored correspondence table, in a step S6. In other words, the device A interprets the gesture made by the user with the device B as a specific command to control the device A.

The method may further include a step S7 of controlling the device A based on the command determined in the step S6. In other words, the device A executes the command.

If the determined location data does not match any of the stored gesture patterns, the steps S2 to S4 are repeated.

The method of gesture detection may be executed as long as the device B is within the radio coverage of the device A.

In another embodiment, the determined location data of the UWB radio device B may be used to detect a gesture executed by the user wearing or holding the device B, based on the location data of the device B, and display said gesture of the user on a display device, as something that is drawn by the user. In other words, the user may draw something by moving the device B in the air, and the device A may determine the motion or gesture of the device B based on the location data determined at successive points in time and display the detected motion or gesture on a display device of the device A or connected to the device A.

The present disclosure also concerns a UWB radio device, such as the device A, comprising:

- a UWB radio module adapted to implement a UWB radio communication protocol;
- one or more radio antennas adapted to transmit and receive radio waves;
- means adapted to perform the steps of the method of gesture detection previously described.

The present disclosure also concerns a system of gesture detection including:

- a UWB radio device A as above defined and
- another UWB radio device B configured to be handheld or worn by a user, and including a UWB radio module adapted to implement a UWB radio communication protocol and one or more radio antennas adapted to transmit and receive radio waves.

**Claims**

1. A computer implemented method of detecting, by a UWB radio device A, a gesture made by a user wearing or holding another UWB radio device B, including the following steps performed by the UWB radio device A:

   repeatedly exchanging (S2) UWB radio signals with the other UWB radio device B;
   determining (S3, S4) location data of the other UWB radio device B relative to the UWB radio device A at successive points in time, based on the exchanged UWB radio signals;
   detecting (S5) a gesture of the user by processing the determined location data of the other UWB radio device B.

2. The method according to claim 1, wherein the step (S2) of repeatedly exchanging UWB radio signals with the other UWB radio device B includes the steps of:

   - repeatedly transmitting a poll message from the UWB radio device A to the UWB radio device B, and
   - in response, receiving a response message from the UWB radio device B.

3. The method according to claim 2, wherein the step of determining the location data at each of said successive points of time includes

   - determining a signal time-of-flight, based on two corresponding poll and response messages, and
   - estimating (S3) a distance between the two UWB radio devices from the determined signal time-of-flight.

4. The method according to claim 3, wherein determining the signal time-of-flight based on two corresponding poll and response messages includes:

   - measuring, by the UWB radio device A, a round-trip time between the transmission of the poll message and the reception of the response message,
   - extracting a reply time from the response message, and
   - removing said reply time from the measured round-trip time.

5. The method according to any of claims 2 to 4, wherein the UWB radio device A has two receiving antennas ($Rx_{A1}$, $Rx_{A2}$), and the step of determining location data of the other UWB radio device B includes:

   - upon reception of each response message, measuring a difference in a phase of a signal carrying the response message received at each antenna of the UWV radio device, and
   - determining (S4) a direction of the other UWB radio device B based on the measured phase difference.

6. The method according to any of claims 1 to 5, wherein the step (S5) of detecting a gesture of the user includes the step of determining if the determined location data of the other UWB radio device B at successive points in time matches one gesture pattern from a plurality of predetermined gesture patterns.

7. The method according to claim 6, further including a step (S6) of determining a command for controlling the UWB radio device A the gesture of the user is mapped to, based on the determined gesture pattern matching the gesture of the user to a predetermined user command associated with the detected gesture pattern, and a step (S7) of controlling the UWB radio device A based on the determined command.

**8.** The method according to any of claims 1 to 7, further including a step of displaying the gesture of the user detected on a display device of the UWB radio device A or connected to the UWB radio device A.

**9.** The method according to any of claims 1 to 8, further comprising a step of verifying, by the UWB radio device A, that the other UWB radio device B has been previously registered with the UWB radio device A.

**10.** The method according to any of claims 1 to 8, wherein the step (S2) of repeatedly exchanging, over time, UWB radio signals with the other UWB radio device B is started by the UWB radio device A upon detection (S1) of the other UWB radio device B within a radio coverage area of the UWB radio device A.

**11.** A UWB radio device comprising:

- a UWB radio module (110) adapted to implement a UWB radio communication protocol;
- one or more radio antennas ($Tx_A$, $Rx_{A1}$, $Rx_{A2}$) adapted to transmit and receive radio waves;
- means (120, 130, 140) adapted to perform the steps of the method according to any of claims 1 to 10.

**12.** A system of gesture detection including:

- a UWB radio device A according to claim 11 and
- another UWB radio device B configured to be handheld or worn by a user, and including a UWB radio module (210) adapted to implement a UWB radio communication protocol and one or more radio antennas ($Rx_B$, $Tx_B$) adapted to transmit and receive radio waves.

**13.** The system according to claim 12, wherein the other UWB radio device B is one of the devices including a smartphone, a finger ring, and a stylus.

## Figure 1

## Figure 2

| Gesture pattern | Input command |
|---|---|
| | Increase volume |
| | Decrease volume |
| | OK |
| | Next channel |
| | Previous channel |
| | Turn off |
| | Turn on |

## Figure 3

```
        Registration of B by A        S0

        Detection of B by A           S1

              t₀
                              tᵢ= tᵢ₊₁

   S2    Sending poll / Receiving response

  Estimating D_{A,B}          Estimating θ_B
       S3                        S4

           Gesture pattern
           detected?
   S5                              No

                                  Yes
   S6    Map user gesture
          with command

   S7    Control device A
          based on command
```

## Figure 4

A         B

Poll_MES

$ToF_{A,B}$

$T_{round}$      $T_{reply}$

$ToF_{A,B}$

Resp_MES

$$ToF_{A,B} = \frac{T_{round} - T_{reply}}{2}$$

Europäisches
Patentamt

European
Patent Office

Office européen
des brevets

# EUROPEAN SEARCH REPORT

Application Number

EP 22 20 9535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/137204 A1 (NGUYEN HOANG VIET [US] ET AL) 5 May 2022 (2022-05-05) * paragraphs [0034] - [0050], [0060], [0061], [0093] - [0113], [0163], [0164], [0178], [0191] - [0194], [0229], [0230] * * paragraphs [0244] - [0248], [0253] * | 1-13 | INV. G06F3/01 G01S13/76 G06F3/0346 H04N21/41 H04M1/72415 |
| X | WO 2022/197282 A1 (GOOGLE LLC [US]) 22 September 2022 (2022-09-22) * paragraphs [0055] - [0057], [0060] - [0074] * | 1,2,5-13 | |

TECHNICAL FIELDS
SEARCHED      (IPC)

G06F
H04N
G01S
H04M

The present search report has been drawn up for all claims

| Place of search | Date of completion of the search | Examiner |
|---|---|---|
| Munich | 3 May 2023 | Gkeli, Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 20 9535

This annex lists the patent family members relating to the patent documents cited in the above-mentioned European search report.
The members are as contained in the European Patent Office EDP file on
The European Patent Office is in no way liable for these particulars which are merely given for the purpose of information.

03-05-2023

| Patent document cited in search report | | Publication date | Patent family member(s) | | Publication date |
|---|---|---|---|---|---|
| US 2022137204 | A1 | 05-05-2022 | EP | 4172654 A1 | 03-05-2023 |
| | | | US | 2022137204 A1 | 05-05-2022 |
| | | | WO | 2022092861 A1 | 05-05-2022 |
| WO 2022197282 | A1 | 22-09-2022 | TW | 202238327 A | 01-10-2022 |
| | | | WO | 2022197282 A1 | 22-09-2022 |

EPO FORM P0459

For more details about this annex : see Official Journal of the European Patent Office, No. 12/82